# EUROPÄISCHE PATENTANMELDUNG

(11) **EP 1 143 207 A2**
(43) Veröffentlichungstag der Anmeldung: **10.10.2001**
(21) Anmeldenummer: 01108489.4
(22) Anmeldetag: 04.04.2001
(51) Int. Cl.: F25B 6/00, F25B 49/02

(54) **Verfahren zum Betreiben eines mehrstufig luftgekühlten Verflüssigers und mehrstufig luftgekühlter Verflüssiger**

(30) Priorität: 05.04.2000 DE 10016940
(71) Anmelder: Linde Aktiengesellschaft, 65189 Wiesbaden (DE)
(72) Erfinder: Koch, Klaus, 44534 Lünen (DE)
(74) Vertreter: Zahn, Christoph

(57) **Zusammenfassung**

Verfahren zum Betreiben eines mehrstufig luftgekühlten Verflüssigers, wobei jede Stufe einen oder mehrere Ventilatoren aufweist.

Erfindungsgemäß werden lediglich der oder die Ventilatoren der ersten Stufe drehzahlgeregelt betrieben, während der oder die Ventilatoren der weiteren Stufe(n) nicht drehzahlgeregelt betrieben werden.

Zunächst wird immer die erste Stufe angeschaltet und entsprechend dem jeweiligen aktuellen Bedarf werden die weitere(n) Stufe(n) zugeschaltet. Die Zuschaltung der weiteren Stufe(n) erfolgt in Abhängigkeit von der Drehzahl der ersten Stufe.

## Beschreibung

Die Erfindung betrifft ein Verfahren zum Betreiben eines mehrstufig luftgekühlten Verflüssigers, wobei jede Stufe einen oder mehrere Ventilatoren aufweist.

Ferner betrifft die Erfindung einen mehrstufig luftgekühlten Verflüssiger, bei dem jede Stufe einen oder mehrere Ventilatoren aufweist.

Gattungsgemäße, mehrstufig luftgekühlte Verflüssiger werden beispielsweise bei Kältemittel- oder Kältemittelgemischanlagen für die Verflüssigung des verdichteten Kältemittels bzw. Kältemittelgemisches benötigt. Um die erforderliche Verflüssigungsleistung erbringen zu können, müssen im Regelfall mehrere Ventilatoren vorgesehen werden, die den über den Verflüssiger zu führenden Luftstrom bzw. dessen Mengenstrom erhöhen können.

Sind mehrere Ventilatoren erforderlich, so werden diese im Regelfall in mehreren Stufen angeordnet. Dies bedeutet beispielsweise, dass jeder Stufe zwei Ventilatoren zugeordnet sind.

Die Leistungsregelung derartiger Verflüssiger erfolgt nun durch Zu- und Abschalten dieser Stufen, womit eine Verringerung bzw. Erhöhung des Luftmengenstromes verbunden ist. Hierbei kommen zwei unterschiedliche Verfahrensweisen zur Anwendung, nämlich die Leistungsregelung durch die sog. Stufenschaltung und die Leistungsregelung durch die sog. Drehzahlregelung.

Bei der Leistungsregelung durch Stufenschaltung werden die Ventilatoren über eine sog. Differenzdruck-Schaltung zu- oder abgeschaltet. Da der Differenzdruck zwischen dem Zu- und dem Abschalten der Ventilatoren jedoch immer größer als die Unterkühlung des Kältemittels bzw. Kältemittelgemisches ist, kann nicht vermieden werden, dass die den Verflüssiger verlassende Flüssigkeit noch Dampfanteile enthält. Diese Dampfanteile sind jedoch in der Flüssigkeit unerwünscht, da sie in den dem Verflüssiger nachgeschalteten Verdampfern zu einer Unterversorgung der Verdampfer und gegebenenfalls sogar zu einem Abschalten von Verdichtem führen (können).

Erfolgt die Leistungsregelung des Verflüssigers durch eine Drehzahlregelung so treten dann die gleichen Probleme auf, wenn die niedrigste Drehzahl der Ventilatoren für den aktuellen Leistungsbedarf und damit für den aktuellen Luftmengenbedarf zu hoch wäre, was zur Folge hat, dass der oder die Ventilatoren noch nicht zugeschaltet werden, obwohl dies bereits erforderlich wäre. Dies führt dann dazu, dass die Ventilatoren ständig zwischen dem Betriebszustand "Aus" und "Minimale Drehzahl" hin- und herschalten.

Nachteilig hierbei ist, dass zum einen u. U. die benötigte Verflüssigerleistung nicht erbracht werden kann und zum anderen die Ventilatoren fortlaufend ein- und ausschalten, woraus ein erhöhter Verschleiss der Ventilatoren resultiert.

Aufgabe der vorliegenden Erfindung ist es, ein gattungsgemäßes Verfahren zum Betreiben eines mehrstufig luftgekühlten Verflüssigers sowie einen mehrstufig luftgekühlten Verflüssiger anzugeben, das bzw. der eine optimale Leistungsregelung ermöglicht.

Diese Aufgabe wird durch ein Verfahren zum Betreiben eines mehrstufig luftgekühlten Verflüssigers gelöst, das dadurch gekennzeichnet ist, dass lediglich der oder die Ventilatoren der ersten Stufe drehzahlgeregelt betrieben werden und der oder die Ventilatoren der weiteren Stufe(n) nicht drehzahlgeregelt betrieben werden.

Der erfindungsgemäße, mehrstufig luftgekühlte Verflüssiger ist dadurch gekennzeichnet, dass lediglich der oder die Ventilatoren der ersten Stufe drehzahlgeregelt und der oder die Ventilatoren der weiteren Stufe(n) nicht drehzahlgeregelt ausgelegt sind.

Erfindungsgemäß erfolgt nunmehr die Leistungsregelung nicht mehr durch eine Stufenschaltung oder einer Drehzahlregelung, sondern durch eine Kombination der beiden vorbeschriebenen Regelungsmöglichkeiten. Dadurch wird erreicht, dass die Leistungsregelung optimiert und die mit den vorbeschriebenen Techniken verbundenen Nachteile weitestgehend vermieden werden können.

So wird - entsprechend einer vorteilhaften Ausgestaltung des erfindungsgemäßen Verfahrens - immer zunächst die erste Stufe angeschaltet und abhängig von dem jeweiligen aktuellen Bedarf wird bzw. werden die weitere(n) Stufe(n) zugeschaltet.

Die Erfassung und Ermittlung der benötigten Parameter und Daten erfolgt bei dem erfindungsgemäßen Verfahren analog zu den bekannten Verfahren. Eine Modifizierung existierender Messinstrumente, Messfühler, etc. ist daher nicht erforderlich.

Ist die für den luftgekühlten Verflüssiger benötigte Luftmenge (noch) gering - kann jedoch ohne Zuschalten wenigstens einer Stufe nicht erbracht werden -, so wird erfindungsgemäß nunmehr zunächst die erste Stufe, die drehzahlgeregelt ist, angeschaltet. Abhängig von der Drehzahl der im Betrieb befindlichen ersten Stufe können dann weitere Stufen zugeschaltet werden. Im Regelfall erfolgt die Zuschaltung weiterer Stufen nacheinander; denkbar wäre aber auch, mehrere Stufen gleichzeitig der ersten Stufe zuzuschalten.

Die Zuschaltung einer oder mehrerer weiterer Stufen erfolgt vorzugsweise nicht erst dann, wenn die erste Stufe bzw. deren Ventilatoren ihre maximale Drehzahl erreichen, sondern bereits zu einem früheren Zeitpunkt. Sobald wenigstens eine weitere Stufe zu der ersten Stufe hinzugeschaltet wird, verringert sich bei einem konstanten Leistungsbedarf des Verflüssigers die Drehzahl der Ventilatoren der ersten Stufe, da nunmehr ein Teil der erforderlichen Leistung durch die hinzugeschaltete(n) Stufe(n) erbracht wird.

Das erfindungsgemäße Verfahren zum Betreiben eines mehrstufig luftgekühlten Verflüssigers weiterbildend wird daher vorgeschlagen, dass die oder eine der zugeschalteten weiteren Stufen bei Erreichen einer festgelegten Drehzahl der ersten Stufe abgeschaltet werden.

Dies führt dann dazu, dass sich die Drehzahlen der Ventilatoren der ersten Stufe wieder erhöhen, so dass bei Erreichen eines bestimmten voreingestellten Drehzahlwertes wieder wenigstens eine weitere Stufe zu der ersten Stufe zugeschaltet wird.

Mit dem erfindungsgemäßen Verfahren zum Betreiben eines mehrstufig luftgekühlten Verflüssigers sowie dem erfindungsgemäßen mehrstufig luftgekühlten Verflüssiger kann nunmehr eine stetige Anpassung an den jeweils aktuellen Leistungsbedarf des Verflüssigers gewährleistet werden. Dies hat zur Folge, dass Dampfanteile in der den Verflüssiger verlassenden Flüssigkeit vermieden werden können. Gegenüber einer Betriebsweise, bei der sämtliche Ventilatoren drehzahlgeregelt gesteuert werden, ist die erfindungsgemäße Verfahrensweise deutlich kostengünstiger.

Auch im Vergleich mit einer Verfahrensweise, bei der eine Stufenschaltung der Ventilatoren realisiert wird, ergeben sich Vorteile, die insbesondere darin liegen, dass der Verschleiss der Ventilatoren deutlich verringert wird.

## Patentansprüche

1. Verfahren zum Betreiben eines mehrstufig luftgekühlten Verflüssigers, wobei jede Stufe einen oder mehrere Ventilatoren aufweist, **dadurch gekennzeichnet, dass** lediglich der oder die Ventilatoren der ersten Stufe drehzahlgeregelt betrieben werden und der oder die Ventilatoren der weiteren Stufe(n) nicht drehzahlgeregelt betrieben werden.

2. Verfahren nach Anspruch 1, **dadurch gekennzeichnet, dass** zunächst die erste Stufe angeschaltet und entsprechend dem jeweiligen aktuellen Bedarf die weitere(n) Stufe(n) zugeschaltet werden.

3. Verfahren nach Anspruch 1 oder 2, **dadurch gekennzeichnet, dass** die Zuschaltung der weiteren Stufe(n) in Abhängigkeit von der Drehzahl der ersten Stufe erfolgt.

4. Verfahren nach einem der vorhergehenden Ansprüche, **dadurch gekennzeichnet, dass** die oder eine der zugeschalteten weiteren Stufe(n) bei Erreichen einer festgelegten Drehzahl der ersten Stufe abgeschaltet werden.

5. Mehrstufig luftgekühlter Verflüssiger, bei dem jede Stufe einen oder mehrere Ventilatoren aufweist, **dadurch gekennzeichnet, dass** lediglich der oder die Ventilatoren der ersten Stufe drehzahlgeregelt und der oder die Ventilatoren der weiteren Stufe(n) nicht drehzahlgeregelt ausgelegt sind.
